# EUROPEAN PATENT APPLICATION

(11) **EP 2 682 643 A1**
(43) Date of publication of application: **08.01.2014**
(21) Application number: 11860529.4
(22) Date of filing: 04.03.2011
(51) Int. Cl.: F16H 3/18, F16H 63/30

(54) **REVERSE SYNCHRONIZING DEVICE FOR MANUAL TRANSMISSION**

(71) Applicant: TOYOTA JIDOSHA KABUSHIKI KAISHA, Toyota-shi, Aichi-ken, 471-8571 (JP)
(72) Inventor: OHKI, Takao, Toyota-shi Aichi 471-8571 (JP); HASHIMOTO, Manabu, Toyota-shi Aichi 471-8571 (JP)
(74) Representative: Kuhnen & Wacker
(86) International application number: PCT/JP2011/055081
(87) International publication number: WO 2012/120593

(57) **Abstract**

A tapered cone surface 18g is provided on an outer circumferential surface of a reverse idler gear 18. A reverse gear synchro plate 83 is attached to far end portions of guide shafts 81 and 82 which are supported by a reverse idler shaft 5 in such a manner that the guide shafts 81 and 82 can slide freely. The reverse gear synchro plate 83 has a tapered cone surface 83f facing the tapered cone surface 18g. A detent mechanism 9 consisting of a detent groove 91 and a lock ball mechanism 92 is provided on an external surface of the guide shaft 82. The detent groove 91 has a non-synchronizing incline portion 97 formed therein. When the lock ball mechanism 92 exerts a pressing force on the non-synchronizing incline portion 97, a component of the force separates the tapered cone surface 83f of the reverse gear synchro plate 83 from the tapered cone surface 18g of the reverse idler gear 18.

## Description

### Technical Field

The present invention relates to a reverse (reverse travel gear) synchronizer for a manual transmission mounted on, for example, an automobile, and in particular to a countermeasure to improve reliability of gear shifting operation in shifting to reverse.

### Background Art

Conventionally, in a manual transmission, the reverse idler gear may not be smoothly engaged with the reverse gear (also known as the "reverse drive gear" or the "reverse driven gear") in a reverse shifting operation in which gears are shifted from forward to reverse. The non-smooth engagement can cause so-called "reverse shift gear whining."

For example, to shift to reverse in a manual transmission on an FR (front engine, rear wheel drive) vehicle, the vehicle is often halted. After that, it is started to engage a reverse idler gear with a reverse gear on the countershaft which is rotating under inertia (hereinafter, will be referred to as a "reverse drive gear" or a "counter gear"), which is further followed by starting of engagement of the reverse idler gear with a reverse gear on the output shaft (hereinafter, will be referred to as a "reverse driven gear").

When that is the case, the reverse idler gear, now rotating due to its engagement with the rotating reverse drive gear, will be engaged with the non-rotating reverse driven gear (the reverse driven gear is not rotating because the vehicle has been halted). There exists, however, a rotational difference between the (rotating) reverse idler gear and the (not-rotating) reverse driven gear, and the difference can impede smooth engagement and may cause reverse shift gear whining.

A rotational difference also arises between the reverse drive gear and the reverse idler gear when they are to be engaged. Nevertheless, since the reverse idler gear has a sufficiently smaller inertia than a combination of the countershaft and the reverse drive gear, gear whining is unlikely to occur. In contrast, when the reverse idler gear is to be engaged with the reverse driven gear, gear whining is likely to occur because the reverse idler gear, having been already engaged with the reverse drive gear, is rotating integrally with the countershaft and thereby has a greater inertia.

Gear whining prevention devices (reverse synchronizers) are proposed as disclosed in, for example, Patent Document 1 and Patent Document 2 with an object to prevent the reverse shift gear whining.

Each patent document discloses a manual transmission fitted with a selective sliding reverse mechanism, wherein: a reverse synchronizer is disposed between a reverse idler shaft and a reverse idler gear, the reverse idler shaft supporting the reverse idler gear in a freely rotatable manner; and when the reverse idler gear slides in such a direction that it can engage a reverse drive gear and a reverse driven gear, the reverse synchronizer synchronizes the (rotating) reverse idler gear to the (non-rotating) reverse idler shaft to stop the rotation of the reverse idler gear.

### Citation List

### Patent Literature

Patent Document 1: Japanese Examined Utility Model Publication, Jitsukousho, No. 62-22694
Patent Document 2: Japanese Patent Application Publication, Tokukaihei, No. 9-236178

### Summary of the Invention

### Technical Problem

The conventional reverse synchronizers, however, have the following problems. When the driver of the vehicle shifts gears to reverse, the reverse idler gear slides, in response to a gear shifting operation of a shift lever, in such a direction that it can engage the reverse drive gear and the reverse driven gear. If the driver suspends the gear shifting operation of the shift lever while the reverse idler gear is sliding, the reverse idler gear may possibly stop sliding without properly engaging (semi-engaging) with the reverse drive gear and the reverse driven gear. Thus, improper engagement occurs where the reverse idler gear stops sliding before completely engaging the reverse drive gear and the reverse driven gear. That may hinder good transfer of rotational driving force and/or negatively affect durability of gears.

According to Patent Document 1, the rotating reverse idler gear is synchronized with the reverse idler shaft by frictional contact between a tapered cone surface formed on a friction member constituting the reverse synchronizer and a tapered cone surface formed on the reverse idler gear, so that the reverse idler gear stops rotating. Therefore, if the gear shifting operation of the shift lever is suspended while the reverse idler gear is sliding, the frictional contact between the tapered cone surfaces continues. The tapered cone surfaces may wear out badly due to the friction, which could lead to poor reliability of the synchronization operation of the reverse synchronizer.

In view of these problems, it is an object of the present invention to provide a reverse synchronizer for a manual transmission capable of improving reliability of gear shifting operation in shifting to reverse.

### Solution to Problem

### Principles in Solving the Problems

The present invention, conceived to accomplish the object, has the following principles for solving the problems. After stopping the rotation of the reverse idler gear by synchronizing the reverse idler gear to the reverse idler shaft, the frictional contact section (tapered cone surface) of the reverse idler gear and the frictional contact section (tapered cone surface) of the reverse idler shaft, which have been exhibiting synchronization effect, are forcibly separated. The separating force is then utilized to move the reverse idler gear to a reverse gear establishing position.

### Means to Solve Problems

Specifically, the present invention is made on a reverse synchronizer for a manual transmission including a reverse idler gear capable of moving reciprocally between a reverse gear establishing position where rotational driving force can be transferred from a reverse drive gear to a reverse driven gear and vice versa and a non-reverse gear establishing position where no rotational driving force can be transferred from the reverse drive gear to the reverse driven gear and vice versa, wherein in moving the reverse idler gear toward the reverse gear establishing position, a shaft-side synchronization section provided on a reverse idler shaft side and a gear-side synchronization section provided on a reverse idler gear side are brought into contact with each other so that rotation of the reverse idler gear is synchronized with rotation of the reverse idler shaft. The reverse synchronizer is configured to include synchronization section separating means for applying, after synchronizing the reverse idler gear to the reverse idler shaft by the contact between the shaft-side synchronization section and the gear-side synchronization section in moving the reverse idler gear toward the reverse gear establishing position, a biasing force to the shaft-side synchronization section in such a direction as to move the shaft-side synchronization section away from the gear-side synchronization section.

With this feature, the reverse idler gear is engaged by another gear (e.g., reverse driven gear) after the synchronization operation is done through the contact between the shaft-side synchronization section provided on the reverse idler shaft side and the gear-side synchronization section provided on the reverse idler gear side in moving the reverse idler gear toward the reverse gear establishing position. Accordingly, occurrence of reverse shift gear whining is prevented. After synchronizing the reverse idler gear to the reverse idler shaft, the synchronization section separating means applies a biasing force to the shaft-side synchronization section in such a direction as to move the shaft-side synchronization section away from the gear-side synchronization section. Accordingly, the frictional contact between the shaft-side synchronization section and the gear-side synchronization section is released, and the biasing force can be utilized to move the reverse idler gear to the reverse gear establishing position. Therefore, even if the driver of the vehicle suspends the gear shifting operation of the shift lever while the reverse idler gear is moving, the reverse idler gear properly engages the reverse drive gear and the reverse driven gear. Consequently, incomplete engagement is prevented. Frictional wear is also prevented from increasing due to continuing frictional contact between the shaft-side synchronization section and the gear-side synchronization section. A high level of reliability is thus maintained for the synchronization operation of the reverse synchronizer over an extended period of time.

The synchronization section separating means may be configured, specifically, so that: the shaft-side synchronization section is a tapered cone surface provided on a reverse idler gear side of a synchronization member supported so as to reciprocally move freely relative to the reverse idler shaft; the gear-side synchronization section is a tapered cone surface formed on an outer circumferential surface of the reverse idler gear; and the synchronization section separating means includes: a non-synchronizing incline portion formed on the synchronization member so as to incline outward when viewed in such a direction that the reverse idler gear moves toward the reverse gear establishing position; and a press mechanism for exerting a pressing force on the non-synchronizing incline portion in a direction which is orthogonal to the direction in which the reverse idler gear is moved.

Accordingly, when the press mechanism is applying a pressing force to the non-synchronizing incline portion, a component of the pressing force acts as a biasing force which separates the tapered cone surface of the synchronization member from the tapered cone surface of the reverse idler gear. Therefore, the tapered cone surfaces can be separated from each other at any time by appropriately specifying the shape of the non-synchronizing incline portion formed on the synchronization member.

The reverse idler gear being moved to the reverse gear establishing position using the biasing force may be achieved, as a specific example, by the synchronization member being retained by a snap ring attached to an outer circumferential section of the reverse idler gear so as to move in conjunction with movement of the reverse idler gear.

In other words, when the press mechanism is applying a pressing force to the non-synchronizing incline portion, a component of the force acts on the reverse idler gear from the synchronization member via a snap ring, thereby moving the reverse idler gear to the reverse gear establishing position.

The synchronization member may be configured, specifically, so that in moving the reverse idler gear toward the reverse gear establishing position, the reverse idler gear starts to engage the reverse driven gear after having started to engage the reverse drive gear. In addition, the synchronization member may include a synchronizing incline portion provided contiguously with an end, of the non-synchronizing incline portion, toward which the reverse idler gear moving toward the reverse gear establishing position moves, and the synchronizing incline portion may incline inward when viewed in such a direction that the reverse idler gear moves toward the reverse gear establishing position. Furthermore, the synchronizing incline portion and the non-synchronizing incline portion may have an interface at a place where in moving the reverse idler gear toward the reverse gear establishing position, a point of application of the pressing force exerted by the press mechanism advances from the synchronizing incline portion to the non-synchronizing incline portion at a time when the reverse idler gear starts to engage the reverse driven gear.

With this configuration, when the reverse idler gear has moved toward the reverse gear establishing position and started to engage the reverse drive gear, but is yet to start to engage the reverse driven gear, the pressing force exerted by the press mechanism is acting on the synchronizing incline portion. A component of the pressing force acts so as to bring the tapered cone surface of the synchronization member and the tapered cone surface of the reverse idler gear closer to each other. In other words, the component acts so as to synchronize the reverse idler gear and the reverse drive gear to the reverse idler shaft. Thereafter, as the reverse idler gear starts to engage the reverse driven gear, the press mechanism applies a pressing force to the non-synchronizing incline portion as mentioned above. The component of the pressing force separates the tapered cone surface of the synchronization member from the tapered cone surface of the reverse idler gear. By switching the direction of a component of the pressing force exerted by the press mechanism in this manner, an appropriate shape design for the synchronization member can achieve good synchronization operation and prevention of frictional wear through separation of the tapered cone surfaces from each other.

### Advantageous Effects of the Invention

In the present invention, after synchronizing the reverse idler gear to the reverse idler shaft, the shaft-side synchronization section and the gear-side synchronization section, which have been exhibiting the synchronization effect, are separated. Hence, the reliability of the gear shifting operation is improved, and the frictional wear of the shaft-side synchronization section and the gear-side synchronization section can be reduced.

### Brief Description of Drawings

Figure 1 is a skeleton view showing a gear layout for a manual transmission in accordance with an embodiment.
Figure 2 is a schematic view showing the positions of the centers of shafts and an arrangement of the gears supported by the shafts in a transmission case.
Figure 3 is a diagram showing a sketch of a shift pattern for a 6-speed manual transmission.
Figure 4 is a cross-sectional view of a reverse gear train and a reverse synchronizer.
Figure 5(a) is a diagram showing a state of a reverse synchronizer when a reverse idler gear and a reverse drive gear start to engage, and Figure 5(b) is a diagram showing the position of a lock ball at that time.
Figure 6(a) is a diagram showing a state of the reverse synchronizer when the reverse idler gear and the reverse drive gear are about to engage, and Figure 6(b) is a diagram showing the position of the lock ball at that time.
Figure 7(a) is a diagram showing a state of the reverse synchronizer when the reverse idler gear and a reverse driven gear start to engage, and Figure 7(b) is a diagram showing the position of the lock ball at that time.
Figure 8(a) is a diagram showing a state of the reverse synchronizer when the reverse idler gear is about to engage the reverse drive gear and the reverse driven gear, and Figure 8(b) is a diagram showing the position of the lock ball at that time.
Figure 9(a) is a diagram showing a state of the reverse synchronizer when a reverse gear is established, and Figure 9(b) is a diagram showing the position of the lock ball at that time.

### Description of Embodiments

The following will describe embodiments of the present invention in reference to drawings. In the present embodiment, the present invention is applied to a synchronized manual transmission with six forward gears and one reverse gear mounted on an FR (front engine, rear wheel drive) vehicle.

### Gear Layout for Manual Transmission

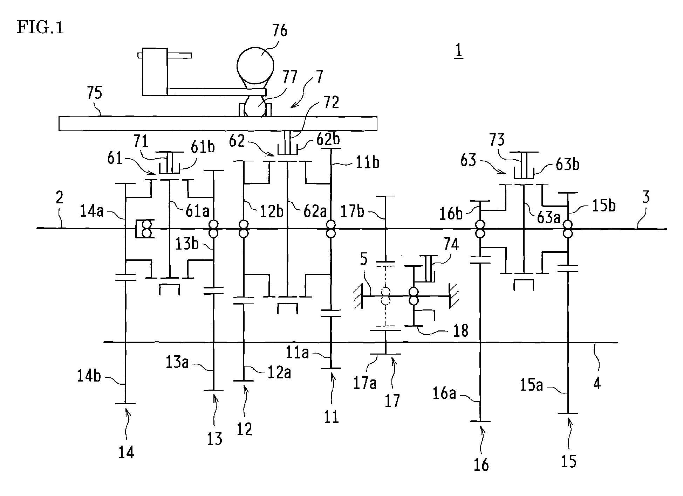

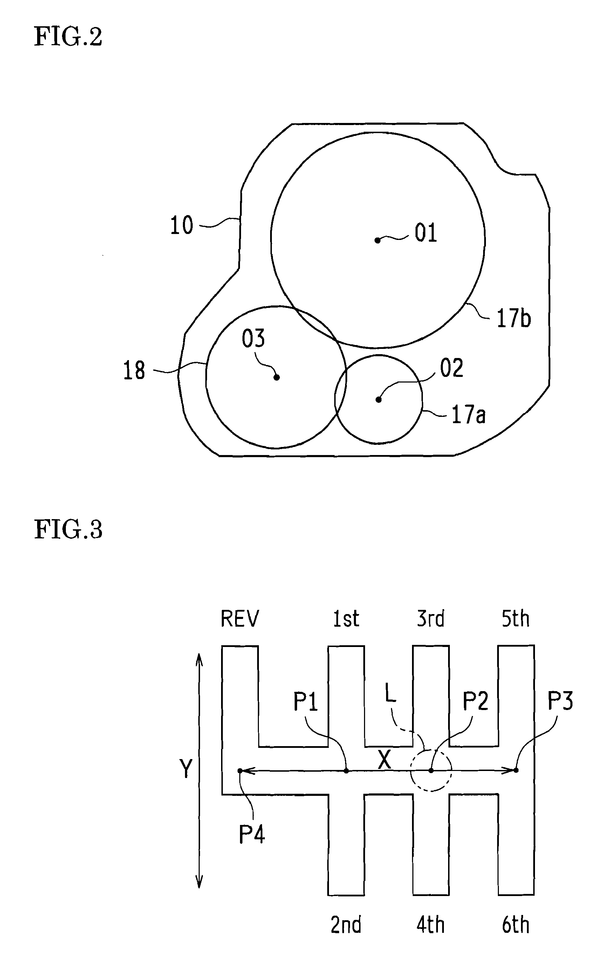

Figure 1 is a skeleton view showing a gear layout for a manual transmission 1 in accordance with the present embodiment. The gear layout shown in Figure 1 is enclosed in a transmission case 10 (see Figure 2). The gear layout includes an input shaft 2, an output shaft 3 which is disposed on the same shaft line as is the input shaft 2, a countershaft 4 which is disposed parallel to the input shaft 2 and the output shaft 3, and a reverse idler shaft 5. The input shaft 2, the output shaft 3, and the countershaft 4 are supported in a freely rotatable manner by the transmission case 10 via bearings and/or like members. The reverse idler shaft 5 is supported in a non-rotatable manner (fixed) by the transmission case 10.

The input shaft 2 is connected to a crankshaft of an engine (not shown) via a clutch mechanism to receive a rotational driving force from the engine as a result of engagement through the clutch mechanism.

The output shaft 3 is capable of transferring, to a propeller shaft (not shown), the rotational driving force of the engine transferred from the input shaft 2 and the countershaft 4. The propeller shaft is connected to a right and a left drive wheel (rear wheels) via differential gears and a drive shaft (not shown) so that the rotational driving force of the output shaft 3 is transferred to the drive wheel via these propeller shaft, differential gears, and drive shaft.

The countershaft 4 is adapted to rotate in response to the receiving of the rotational driving force from the input shaft 2. In addition, the rotational driving force of the countershaft 4 is subjected to speed change by a selected one of gear trains 11 to 17 (described later) transferring the rotational driving force and is transferred to the output shaft 3.

Figure 2 is a schematic view, as observed from the rear of the vehicle, of the positions of the centers of the shafts 2, 3, 4, and 5 (the position of the centers of the input shaft 2 and the output shaft 3 is indicated by O1, the position of the center of the countershaft 4 by 02, and the position of the center of the reverse idler shaft 5 by 03) and the arrangement of a reverse drive gear 17a, a reverse driven gear 17b, and a reverse idler gear 18 constituting a reverse gear train 17 (described later) in the transmission case 10. As illustrated in Figure 2, in the transmission case 10, the countershaft 4 (shaft center position 02) is disposed directly beneath the output shaft 3 (shaft center position O1), and the reverse idler shaft 5 (shaft center position 03) is disposed beside the countershaft 4 (the left side of Figure 2).

The following will describe the gear trains 11 to 17.

There is provided a fourth-speed gear train 14 between the input shaft 2 and the countershaft 4. Meanwhile, between the output shaft 3 and the countershaft 4, the third-speed gear train 13, the second-speed gear train 12, the first-speed gear train 11, the reverse gear train 17, the sixth-speed gear train 16, and the fifth-speed gear train 15 are provided in this order as viewed from left (close to the engine) to right (close to the drive wheel) in Figure 1. The order of these gear trains 11 to 17 is by no means limited to this example. Alternatively, the gear trains 11 to 17 may be disposed in any other appropriate order.

The fourth-speed gear train 14 is constituted by a fourth drive gear 14a provided on the input shaft 2 in such a manner as to rotate integrally with the input shaft 2 and a fourth driven gear 14b provided on the countershaft 4 in such a manner as to rotate integrally with the countershaft 4. The fourth drive gear 14a and the fourth driven gear 14b are in mesh.

The third-speed gear train 13 is constituted by a third drive gear 13a provided on the countershaft 4 in such a manner as to rotate integrally with the countershaft 4 and a third driven gear 13b provided on the output shaft 3 in a freely rotatable manner (in such a manner as to rotate independently of the output shaft 3), The third drive gear 13a and the third driven gear 13b are in mesh.

Between the fourth-speed gear train 14 and the third-speed gear train 13 is there disposed a third-and-fourth-speed synchronizer (synchromesh mechanism) 61. The third-and-fourth-speed synchronizer 61 includes a hub 61a provided on the output shaft 3 in such a manner as to rotate integrally with the output shaft 3 and a hub sleeve 61b provided along the outer circumference of the hub 61a in such a manner as to be moveable in a direction along the shaft line. As the hub sleeve 61b is moved toward the fourth drive gear 14a by a shift mechanism 7 (described later), the fourth drive gear 14a engages the hub 61a. The engagement directly couples the input shaft 2 and the output shaft 3, which establishes fourth gear. Meanwhile, as the hub sleeve 61b is moved toward the third driven gear 13b, the third driven gear 13b engages the hub 61a. The engagement couples the third driven gear 13b to the output shaft 3 in such a manner that the third driven gear 13b can rotate integrally with the output shaft 3, which establishes third gear (a state where the third-speed gear train 13 transfers rotational driving force from the countershaft 4 to the output shaft 3). The synchronizer 61 has a well-known structure and will therefore not be described in detail here.

The second-speed gear train 12 is constituted by a second drive gear 12a provided on the countershaft 4 in such a manner as to rotate integrally with the countershaft 4 and a second driven gear 12b provided on the output shaft 3 in a freely rotatable manner. The second drive gear 12a and the second driven gear 12b are in mesh.

The first-speed gear train 11 is constituted by a first drive gear 11a provided on the countershaft 4 in such a manner as to rotate integrally with the countershaft 4 and a first driven gear 11b provided on the output shaft 3 in a freely rotatable manner. The first drive gear 11a and the first driven gear 11b are in mesh.

Between the second-speed gear train 12 and the first-speed gear train 11 is there disposed a first-and-second-speed synchronizer 62. The first-and-second-speed synchronizer 62 includes a hub 62a provided on the output shaft 3 in such a manner as to rotate integrally with the output shaft 3 and a hub sleeve 62b provided along the outer circumference of the hub 62a in such a manner as to be moveable in a direction along the shaft line. As the hub sleeve 62b is moved toward the second driven gear 12b by the shift mechanism 7 (described later), the second driven gear 12b engages the hub 62a. The engagement couples the second driven gear 12b to the output shaft 3 in such a manner that the second driven gear 12b can rotate integrally with the output shaft 3, which establishes second gear (a state where the second-speed gear train 12 transfers rotational driving force from the countershaft 4 to the output shaft 3). Meanwhile, as the hub sleeve 62b is moved toward the first driven gear 11b, the first driven gear 11b engages the hub 62a. The engagement couples the first driven gear 11b to the output shaft 3 in such a manner that the first driven gear 11b can rotate integrally with the output shaft 3, which establishes first gear (a state where the first-speed gear train 11 transfers rotational driving force from the countershaft 4 to the output shaft 3).

The sixth-speed gear train 16 is constituted by a sixth drive gear 16a provided on the countershaft 4 in such a manner as to rotate integrally with the countershaft 4 and a sixth driven gear 16b provided on the output shaft 3 in a freely rotatable manner. The sixth drive gear 16a and the sixth driven gear 16b are in mesh.

The fifth-speed gear train 15 is constituted by a fifth drive gear 15a provided on the countershaft 4 in such a manner as to rotate integrally with the countershaft 4 and a fifth driven gear 15b provided on the output shaft 3 in a freely rotatable manner. The fifth drive gear 15a and the fifth driven gear 15b are in mesh.

Between the sixth-speed gear train 16 and the fifth-speed gear train 15 is there disposed a fifth-and-sixth-speed synchronizer 63. The fifth-and-sixth-speed synchronizer 63 includes a hub 63a provided on the output shaft 3 in such a manner as to rotate integrally with the output shaft 3 and a hub sleeve 63b provided along the outer circumference of the hub 63a in such a manner as to be moveable in a direction along the shaft line. As the hub sleeve 63b is moved toward the sixth driven gear 16b by the shift mechanism 7 (described later), the sixth driven gear 16b engages the hub 63a. The engagement couples the sixth driven gear 16b to the output shaft 3 in such a manner that the sixth driven gear 16b can rotate integrally with the output shaft 3, which establishes sixth gear (a state where the sixth-speed gear train 16 transfers rotational driving force from the countershaft 4 to the output shaft 3). Meanwhile, as the hub sleeve 63b is moved toward the fifth driven gear 15b, the fifth driven gear 15b engages the hub 63a. The engagement couples the fifth driven gear 15b to the output shaft 3 in such a manner that the fifth driven gear 15b can rotate integrally with the output shaft 3, which establishes fifth gear (a state where the fifth-speed gear train 15 transfers rotational driving force from the countershaft 4 to the output shaft 3).

The reverse gear train 17 is constituted by a reverse drive gear 17a provided on the countershaft 4 in such a manner as to rotate integrally with the countershaft 4, a reverse driven gear 17b provided on the output shaft 3 in such a manner as to rotate integrally with the output shaft 3, and a reverse idler gear 18 supported on the reverse idler shaft 5 in a freely rotatable manner (in such a manner as to rotate independently of the reverse idler shaft 5) and also in such a manner as to be freely slideable in a direction along the shaft line (freely slideable on the reverse idler shaft 5).

The gears 17a, 17b, and 18, constituting the reverse gear train 17, are arranged as follows. During a forward motion (while the rotational driving force is being transferred by one of the forward-motion gear trains), the shift mechanism 7 (described later) keeps the reverse idler gear 18 in a retracted position (where the reverse idler gear 18 do not engage the reverse drive gear 17a or the reverse driven gear 17b; see the position indicated by solid lines in Figure 1). When that is the case, no power transfer occurs between the reverse drive gear 17a and the reverse driven gear 17b. Meanwhile, during a backward motion, all the forward-motion synchronizers 61, 62, and 63 are in neutral, and the reverse idler gear 18 is moved by the shift mechanism 7 (described later) along the shaft line of the reverse idler shaft 5 (moved forward). Thus, the reverse idler gear 18 engages both the reverse drive gear 17a and the reverse driven gear 17b (see the position indicated by broken lines in Figure 1), which reverses the direction of rotation (direction of rotation of the countershaft 4) of the reverse drive gear 17a before power is transferred to the reverse driven gear 17b (output shaft 3). As a result, the output shaft 3 rotates in a direction opposite to the direction in which the output shaft 3 rotates with a forward gear, and the drive wheel rotates backward.

The shift mechanism 7, which actuates the synchronizers 61, 62, and 63 and slides the reverse idler gear 18, includes shift forks 71, 72, 73, and 74 respectively in mesh with the hub sleeves 61b, 62b, and 63b and the reverse idler gear 18. The aforementioned motion of the hub sleeve 61b, 62b, and 63b and the reverse idler gear 18 is caused by a motion of the shift forks 71, 72, 73, and 74.

These shift forks 71, 72, 73, and 74 are attached to a fork shaft 75 disposed parallel to the output shaft 3 (Figure 1 shows only the fork shaft 75 which connects to the first-and-second-speed synchronizer 62). The fork shaft 75 is engaged selectively by a shift inner lever 77 built integrally with a shift and select lever shaft 76 and is moved along the shaft line (left/right direction in Figure 1) by the shift inner lever 77, to achieve a predetermined gear shifting operation. In other words, a selection operation performed through a shift lever L (see Figure 3) provided inside the vehicle selects a fork shaft 75 which the shift inner lever 77 is to engage, and a gear shifting operation performed through the shift lever L moves the fork shaft 75 and hence the shift fork 72 (71, 73, and 74), so as to actuate the synchronizers 61, 62, and 63 (thereby establishing forward gear) and slide the reverse idler gear 18 (thereby establishing reverse gear). The shift mechanism 7 has a well-known structure and will therefore not be described in detail here.

### Shift Pattern

Figure 3 shows a sketch of a shift pattern for a 6-speed manual transmission in accordance with the present embodiment. The shift lever L, indicated by dash-double-dot lines in Figure 3, has such a shape that it allows for a selection operation to be done in a direction indicated by arrow X in Figure 3 and a gear shifting operation to be done in a direction, indicated by arrow Y, which is orthogonal to the selection operation direction.

A first-speed/second-speed selection position P1, a third-speed/fourth-speed selection position P2, a fifth-speed/sixth-speed selection position P3, and a reverse selection position P4 are arranged in a row in the selection operation direction.

A gear shifting operation (in a direction indicated by arrow Y) performed at the first-speed/second-speed selection position P1 will move the shift lever L to a first-speed-gear position 1st or a second-speed-gear position 2nd. Upon the shift lever L being manipulated to the first-speed-gear position 1st, the first-and-second-speed synchronizer 62 moves the hub sleeve 62b toward the first driven gear 11b, which establishes first gear. In addition, upon the shift lever L being manipulated to the second-speed-gear position 2nd, the first-and-second-speed synchronizer 62 moves the hub sleeve 62b toward the second driven gear 12b, which establishes second gear.

Similarly, a gear shifting operation performed at the third-speed/fourth-speed selection position P2 will move the shift lever L to a third-speed-gear position 3rd or a fourth-speed-gear position 4th. Upon the shift lever L being manipulated to the third-speed-gear position 3rd, the third-and-fourth-speed synchronizer 61 moves the hub sleeve 61b toward the third driven gear 13b, which establishes third gear. In addition, upon the shift lever L being manipulated to the fourth-speed-gear position 4th, the third-and-fourth-speed synchronizer 61 moves the hub sleeve 61b toward the fourth drive gear 14a, which establishes fourth gear.

Furthermore, a gear shifting operation performed at the fifth-speed/sixth-speed selection position P3 will move the shift lever L to a fifth-speed-gear position 5th or a sixth-speed-gear position 6th. Upon the shift lever L being manipulated to the fifth-speed-gear position 5th, the fifth-and-sixth-speed synchronizer 63 moves the hub sleeve 63b toward the fifth driven gear 15b, which establishes fifth gear. In addition, upon the shift lever L being manipulated to the sixth-speed-gear position 6th, the fifth-and-sixth-speed synchronizer 63 moves the hub sleeve 63b toward the sixth driven gear 16b, which establishes sixth gear.

Furthermore, a gear shifting operation performed at the reverse selection position P4 will move the shift lever L to a reverse-gear position REV. Upon the shift lever L being manipulated to the reverse-gear position REV, all the forward-motion synchronizers 61, 62, and 63 are put into neutral, and at the same time, the reverse idler gear 18 slides along the shaft line of the reverse idler shaft 5 into mesh with the reverse drive gear 17a and the reverse driven gear 17b, which establishes reverse gear. Specifically, the reverse idler gear 18 moves into mesh with the reverse drive gear 17a and the reverse driven gear 17b as follows in the present embodiment. The reverse idler gear 18 slides and first engages the reverse drive gear 17a, and then while increasing the width across which it engages the reverse drive gear 17a, starts to engage the reverse driven gear 17b. Finally, when the reverse idler gear 18 has slid a predetermined distance, the positions of the widthwise centers of the teeth of the reverse idler gear 18 match those of the reverse drive gear 17a and the reverse driven gear 17b, which establishes reverse gear. To realize such an engaging operation, as shown in Figure 1, the reverse drive gear 17a and the reverse driven gear 17b have their teeth's widthwise centers facing each other (their positions on the shaft line being matched), with the reverse drive gear 17a having a slightly greater teeth width than the reverse driven gear 17b).

### Reverse Synchronizer

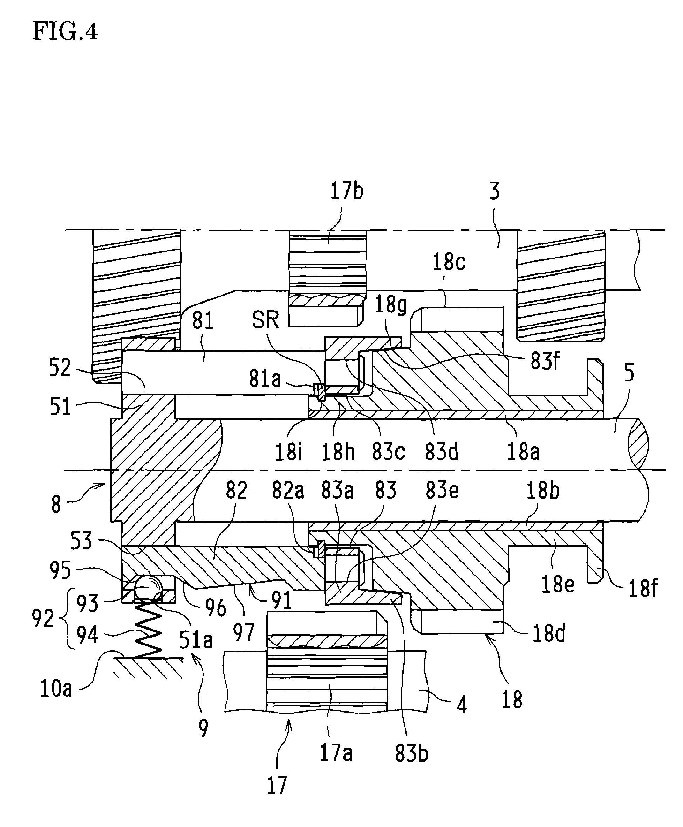

Next, a reverse synchronizer 8 (see Figure 4) will be described which is featured in the present embodiment.

In a reverse shifting operation in which gears are shifted from forward to reverse, the vehicle is halted. After that, it is started to engage the reverse idler gear 18 with the reverse drive gear 17a on the countershaft 4 which is rotating under inertia, which is further followed by starting of engagement of the reverse idler gear 18 with the reverse driven gear 17b on the output shaft 3. If these procedures are implemented, it follows that by engaging the reverse idler gear 18 with the rotating reverse drive gear 17a, the rotating reverse idler gear 18 is engaged by the non-rotating reverse driven gear 17b (the reverse driven gear 17b has stopped its rotation because the vehicle was halted). In this situation, there exists a rotational difference between the (rotating) reverse idler gear 18 and the (non-rotating) reverse driven gear 17b, and the difference can impede smooth engagement and may cause reverse shift gear whining. The reverse synchronizer 8, provided to prevent the reverse shift gear whining, first synchronizes the rotation of the reverse drive gear 17a and the reverse idler gear 18 to that of the reverse idler shaft 5 (i.e., synchronizes the gears 17a and 18 to the reverse idler shaft 5 which is not rotating because it is supported by the transmission case 10 in a non-rotatable manner (fixed)) when or after the reverse drive gear 17a has engaged the reverse idler gear 18. Only after that, the reverse synchronizer 8 allows the reverse idler gear 18 (now stopped) to engage the non-rotating reverse driven gear 17b. In short, the reverse synchronizer 8 prevents the reverse shift gear whining by engaging the non-rotating gears (the reverse idler gear 18 and the reverse driven gear 17b) with each other.

The following will more specifically describe the configuration of the reverse synchronizer 8.

Figure 4 is a cross-sectional view of the reverse gear train 17 and the reverse synchronizer 8.

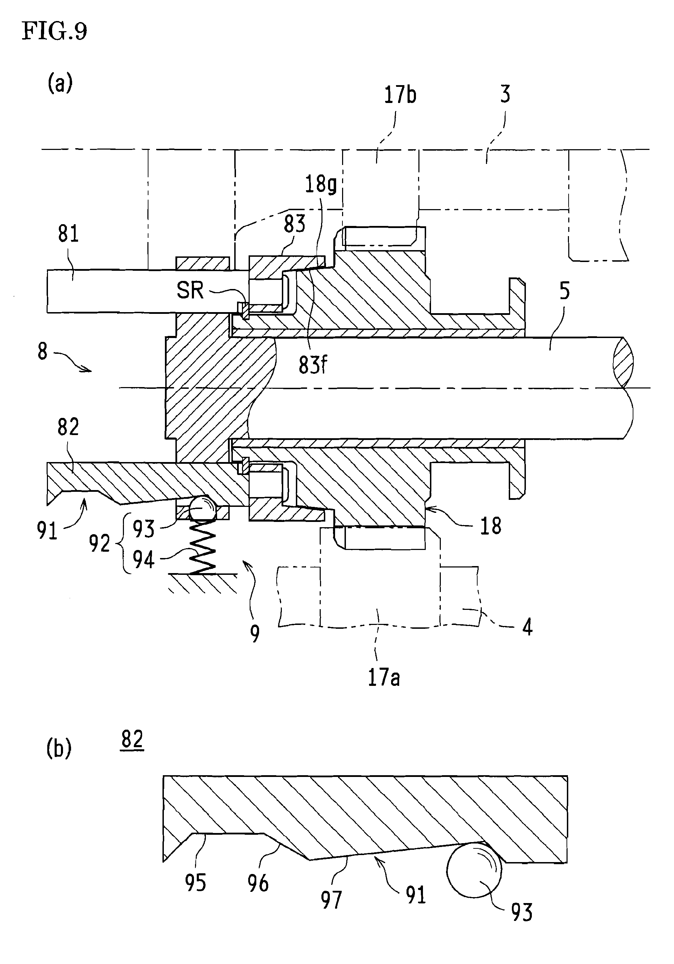

As illustrated in Figure 4, the reverse idler gear 18 has at its center an opening 18a to the inside of which there is attached a sleeve 18b. The reverse idler gear 18 is supported by the sleeve 18b in such a manner that the reverse idler gear 18 can rotate independently of the reverse idler shaft 5 and slide freely in a direction along the shaft line. The reverse idler gear 18 can slide from a retracted position (non-reverse gear establishing position) shown in Figure 4 to a forward moving position (reverse gear establishing position) shown in Figure 9. When the reverse idler gear 18 is at the retracted position shown in Figure 4, the reverse idler gear 18 is in mesh with neither the reverse drive gear 17a nor the reverse driven gear 17b, that is, reverse gear is not established. In this state, the shift lever L is at a position other than the reverse-gear position REV (e.g., at the third-speed/fourth-speed selection position P2 or at the reverse selection position P4). Meanwhile, when the reverse idler gear 18 is at the forward moving position shown in Figure 9, the reverse idler gear 18 is in mesh with both the reverse drive gear 17a and the reverse driven gear 17b, that is, reverse gear is established. In this state, the shift lever L is at the reverse-gear position REV.

In the following description, the leftward direction (the direction in which the reverse idler gear 18 moves when establishing reverse gear) in Figure 4 will be referred to as the "gear forward moving side" or "synchronization activated side." In addition, the rightward direction (the direction in which the reverse idler gear 18 moves when not establishing reverse gear) in Figure 4 will be referred to as the "gear retracted side" or "synchronization deactivated side."

The reverse idler gear 18 has a gear main body 18c with external teeth 18d (which will be engaged by the reverse drive gear 17a and the reverse driven gear 17b). On the gear retracted side of the gear main body 18c is there provided a small diameter section 18e. A flange 18f is formed at an end portion of the gear retracted side of the small diameter section 18e. The reverse-gear shift fork 74 of the shift mechanism 7 is disposed between the gear main body 18c and the flange 18f. Therefore, if the shift lever L is manipulated toward the reverse-gear position REV for gear shifting, the shift mechanism 7 moves the shift fork 74 toward the gear forward moving side so that the shift fork 74 presses the gear main body 18c toward the gear forward moving side. The reverse idler gear 18 thus moves toward the forward moving side (synchronization activated side). Conversely, if the shift lever L is manipulated back toward the reverse selection position P4 for gear shifting, the shift mechanism 7 moves the shift fork 74 toward the gear retracted side so that the shift fork 74 presses the flange 18f toward the gear retracted side. The reverse idler gear 18 thus moves toward the retracted side (synchronization deactivated side).

A tapered cone surface (gear-side synchronization section) 18g, constituting a part of the reverse synchronizer 8, is formed on the outer circumference of the gear main body 18c on the gear forward moving side of the gear main body 18c. The tapered cone surface 18g is formed as an incline surface which inclines at a predetermined angle (e.g., 10°) toward the center of the reverse idler gear 18 on the gear forward moving side. The tapered cone surface 18g, in a synchronization operation on the reverse idler gear 18 (described later) and the reverse idler shaft 5, contacts a tapered cone surface (shaft-side synchronization section) 83f of a reverse gear synchro plate 83 (described later).

A sleeve 18h is formed at an end portion of the gear forward moving side of the reverse idler gear 18. A snap ring SR is attached to a cyclic groove 18i formed on the outer circumferential surface of the sleeve 18h. The snap ring SR performs a function by which the reverse gear synchro plate 83 (described later) is prevented from detaching.

A disc-shaped flange 51 is formed at an end portion of the gear forward moving side of the reverse idler shaft 5. The flange 51 has through holes 52 and 53 cut out through its thickness (in the horizontal direction, parallel to the direction in which the reverse idler gear 18 slides) in an upper and a lower portion thereof.

The through holes 52 and 53 have respective guide shafts 81 and 82 extending therethrough. The guide shafts 81 and 82 have outer diameters which match, or are slightly smaller than, the inner diameters of the through holes 52 and 53. The guide shafts 81 and 82 have lengths which are greater than the sliding distance of the reverse idler gear 18 (from the retracted position shown in Figure 4 to the forward moving position shown in Figure 9).

A reverse gear synchro plate 83 is attached to the gear retracted side ends of the guide shafts 81 and 82. The reverse gear synchro plate 83 includes a substantially disc-shaped plate main body 83a and a circular synchro ring section 83b which extends from an outer peripheral section of the plate main body 83a toward the gear retracted side.

At the central portion of the plate main body 83a is there formed an opening 83c with such an inner diameter that the sleeve 18h of the reverse idler gear 18 can be inserted into the opening 83c. The plate main body 83a has through holes 83d and 83e at places where the through holes 83d and 83e face the through holes 52 and 53 formed in the flange 51 of the reverse idler shaft 5. The through holes 83d and 83e are cut out through the thickness of the plate main body 83a (in the horizontal direction, parallel to the direction in which the reverse idler gear 18 slides).

The gear retracted side ends of the guide shafts 81 and 82 have outer diameters which substantially match the inner diameters of the through holes 83d and 83e formed through the plate main body 83a of the reverse gear synchro plate 83. The gear retracted side ends are press fit in the through holes 83d and 83e with the gear retracted side ends of the guide shafts 81 and 82 being respectively inserted in the through holes 83d and 83e. Accordingly, the reverse gear synchro plate 83 is integrally attached to the gear retracted side ends of the guide shafts 81 and 82.

The reverse gear synchro plate 83 has, on the gear forward moving side, an end face provided to face or contact an end face of the snap ring SR on the gear retracted side. This structure enables the guide shafts 81 and 82 and the reverse gear synchro plate 83 to be integrally retained by the reverse idler gear 18. In other words, the guide shafts 81 and 82 and the reverse gear synchro plate 83 integrally slide in conjunction with the sliding reverse idler gear 18. The guide shafts 81 and 82 have formed thereon snap ring insertion grooves 81a and 82a with a groove width slightly greater than the thickness of the snap ring SR. The guide shafts 81 and 82, the reverse gear synchro plate 83 integrally attached to the guide shafts 81 and 82, and the reverse idler gear 18 are capable of as much relative movement in the horizontal direction (the direction in which the reverse idler gear 18 slides) as the difference between the groove width of the snap ring insertion grooves 81a and 82a and the thickness of the snap ring SR.

The inner circumferential surface of the synchro ring section 83b of the reverse gear synchro plate 83 is a tapered cone surface 83f formed by an incline surface which inclines at a predetermined angle (e.g., 10°) similarly to the tapered cone surface 18g of the reverse idler gear 18. Hence, the tapered cone surface 18g of the reverse idler gear 18 faces the tapered cone surface 83f of the reverse gear synchro plate 83. Since the reverse gear synchro plate 83 and the reverse idler gear 18 are capable of relative movement (capable of as much relative movement as the difference between the groove width of the snap ring insertion grooves 81a and 82a and the thickness of the snap ring SR) as mentioned above, the tapered cone surfaces 18g and 83f are capable of moving relative to each other between a state where they are in contact with each other and a state where they are separated.

The tapered cone surfaces 18g and 83f face each other separated by a narrow gap when the reverse idler gear 18 is not slid to the gear forward moving side (non-synchronized state). On the other hand, when the reverse idler gear 18 is slid to the gear forward moving side, the reverse idler gear 18 relatively moves slightly toward the reverse gear synchro plate 83 (moves closer to the reverse gear synchro plate 83), so that the tapered cone surface 18g of the reverse idler gear 18 moves forward toward the tapered cone surface 83f of the reverse gear synchro plate 83. This forward movement enables the tapered cone surfaces 18g and 83f to make frictional contact with each other (synchronized state). The synchronization member of the present invention is configured as above by the guide shaft 82 and the reverse gear synchro plate 83.

### Detent Mechanism

The present embodiment features a detent mechanism (synchronization section separating means) 9 provided to the guide shaft 82, i.e., a lower one of the guide shafts 81 and 82. The following will describe the detent mechanism 9.

The detent mechanism 9 includes a detent groove 91 which is formed on the outer circumferential surface (lower surface) of the guide shaft 82 and a lock ball mechanism (press mechanism) 92 which applies a pressing force onto the detent groove 91.

The lock ball mechanism 92 includes a metal lock ball 93 and a coil spring 94 producing a pressing force pressing the lock ball 93 toward the detent groove 91. The flange 51 of the reverse idler shaft 5 has a lock ball insertion hole 51a formed in a lower part thereof. The lock ball insertion hole 51a is contiguous with the through holes 53 and contains the lock ball 93 therein. The coil spring 94, disposed between the lock ball 93 and a spring seat 10a formed on the transmission case 10, is compressed between the lock ball 93 and the spring seat 10a. The coil spring 94 hence produces a pressing force pressing the lock ball 93 toward the detent groove 91 (an upward pressing force in Figure 4).

The detent groove 91 includes a horizontal portion 95, a synchronizing incline portion 96, and a non-synchronizing incline portion 97. These portions 95, 96, and 97 are formed as a continuous groove cut out parallel to the length of the guide shaft 82 on the lower surface of the guide shaft 82.

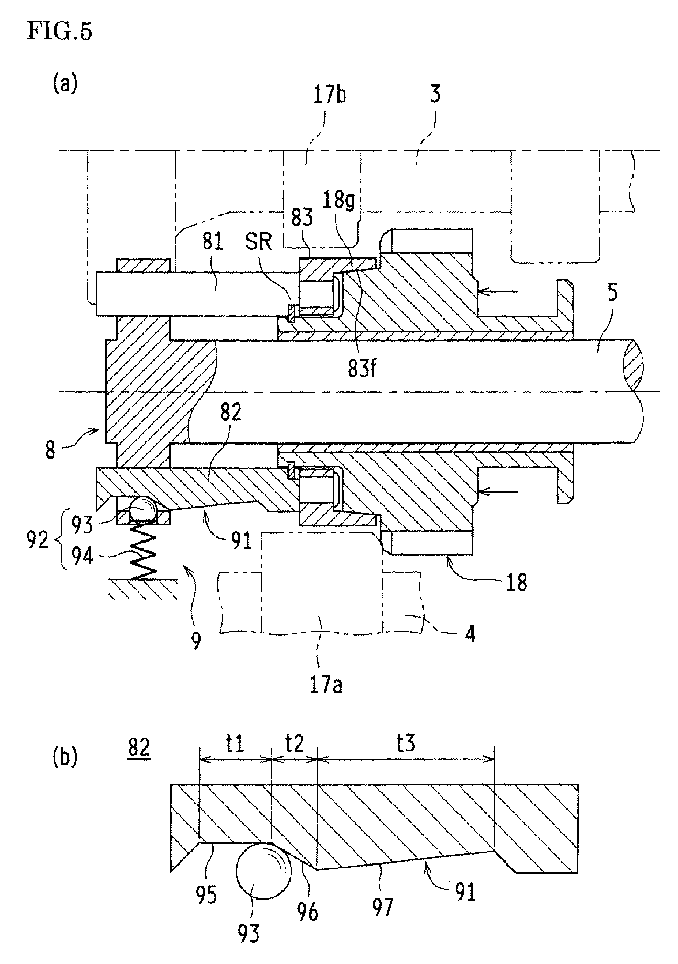

The horizontal portion 95 is positioned on the gear forward moving side of the detent groove 91, extends in the horizontal direction (parallel to the direction in which the reverse idler gear 18 slides), and has a predetermined horizontal dimension. The horizontal portion 95 has a length (a horizontal dimension; see dimension t1 in Figure 5(b)) which substantially matches the sliding distance from the retracted position of the reverse idler gear 18 shown in Figure 4 to the position where the reverse idler gear 18 starts to engage the reverse drive gear 17a (see Figure 5). In other words, the reverse idler gear 18 slides from the retracted position shown in Figure 4, and the guide shaft 82 moves together with the sliding reverse idler gear 18. When the reverse idler gear 18 starts to engage the reverse drive gear 17a, the lock ball 93 reaches the gear retracted side end of the horizontal portion 95 (the gear forward moving side end of the synchronizing incline portion 96) because the guide shaft 82 has moved together with the sliding reverse idler gear 18 (see Figure 5).

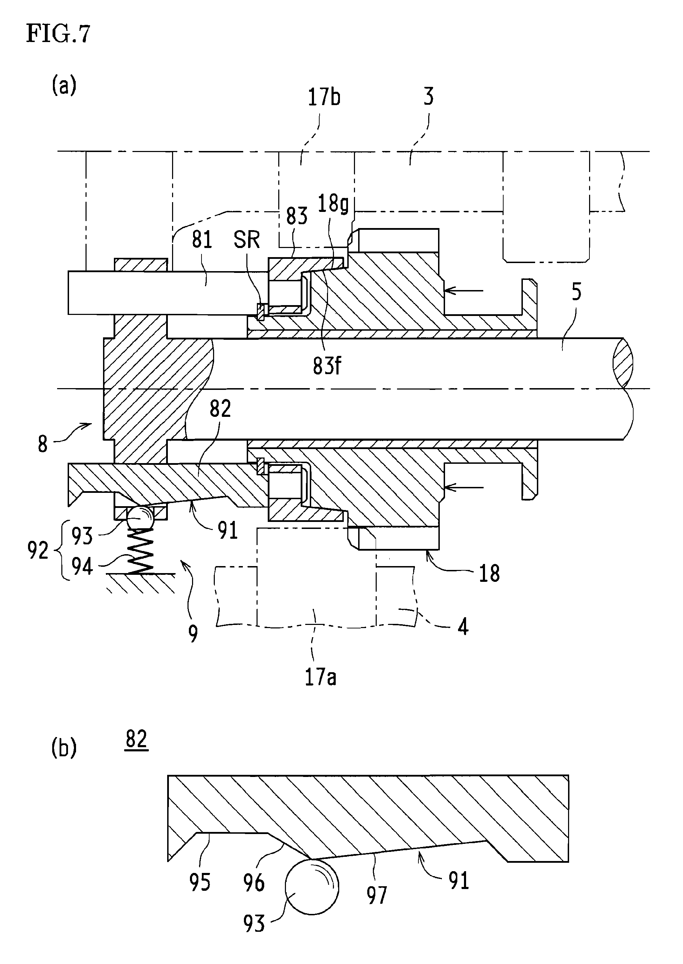

The synchronizing incline portion 96 is formed contiguous with the gear retracted side of the horizontal portion 95 and inclines at a predetermined inclination angle (e.g., 30°) toward the outer circumference (the bottom of Figure 4) on the gear retracted side. The horizontal dimension of the region in which the synchronizing incline portion 96 is formed (see dimension t2 in Figure 5(b)) substantially matches the sliding distance from the position where the reverse idler gear 18 starts to engage the reverse drive gear 17a (the position shown in Figure 5) to the position where the reverse idler gear 18 starts to engage the reverse driven gear 17b (the position shown in Figure 7). In other words, when the reverse idler gear 18 starts to engage the reverse driven gear 17b, the lock ball 93 reaches the gear retracted side end of the synchronizing incline portion 96 (the gear forward moving side end of the non-synchronizing incline portion 97 (i.e., a ridgeline between the synchronizing incline portion 96 and the non-synchronizing incline portion 97)).

The non-synchronizing incline portion 97 is formed contiguous with the gear retracted side of the synchronizing incline portion 96 and inclines at a predetermined inclination angle (e.g., 10°) toward the inner circumference (the top of Figure 4) on the gear retracted side. The inclination angle of the non-synchronizing incline portion 97 is smaller than that of the synchronizing incline portion 96. The horizontal dimension of the region in which the non-synchronizing incline portion 97 is formed (see dimension t3 in Figure 5(b)) substantially matches the sliding distance from the position where the reverse idler gear 18 starts to engage the reverse driven gear 17b (the position shown in Figure 7) to the position where the reverse idler gear 18 engages the reverse drive gear 17a and the reverse driven gear 17b wherein the positions of the widthwise centers of the teeth of the three gears 18, 17a, 17b match (the position shown in Figure 9; the position where reverse gear is established). In other words, when the reverse idler gear 18 has slid to the reverse gear establishing position, the lock ball 93 reaches the gear retracted side end of the non-synchronizing incline portion 97.

### Reverse Gear Shifting Operation

Next will be described a reverse gear shifting operation implemented together with a synchronization operation by the reverse synchronizer 8 configured as described above.

First, as a reverse shifting operation in which gears are shifted from forward to reverse is started, that is, as the shift lever L is manipulated from the reverse selection position P4 toward the reverse-gear position REV for gear shifting, the reverse idler gear 18 which has been in the retracted position starts to move toward the forward moving side (synchronization activated side) as a result of operation of the shift mechanism 7 as illustrated in Figure 4. In this state, as mentioned above, the countershaft 4 and the reverse drive gear 17a are rotating under inertia, whereas the reverse idler gear 18 and the reverse driven gear 17b have stopped.

The reverse idler gear 18 slides toward the gear forward moving side. When the reverse idler gear 18 has slid to a position where the reverse idler gear 18 starts to engage the reverse drive gear 17a as illustrated in Figure 5, the lock ball 93 of the lock ball mechanism 92 reaches the gear retracted side end of the horizontal portion 95 (see Figure 5(b)). So far into the reverse shifting operation, the pressing force exerted by the lock ball 93 onto the detent groove 91 (horizontal portion 95) has not produced a horizontal component of the force. Therefore, the reverse shifting operation only requires a relatively weak manipulation force.

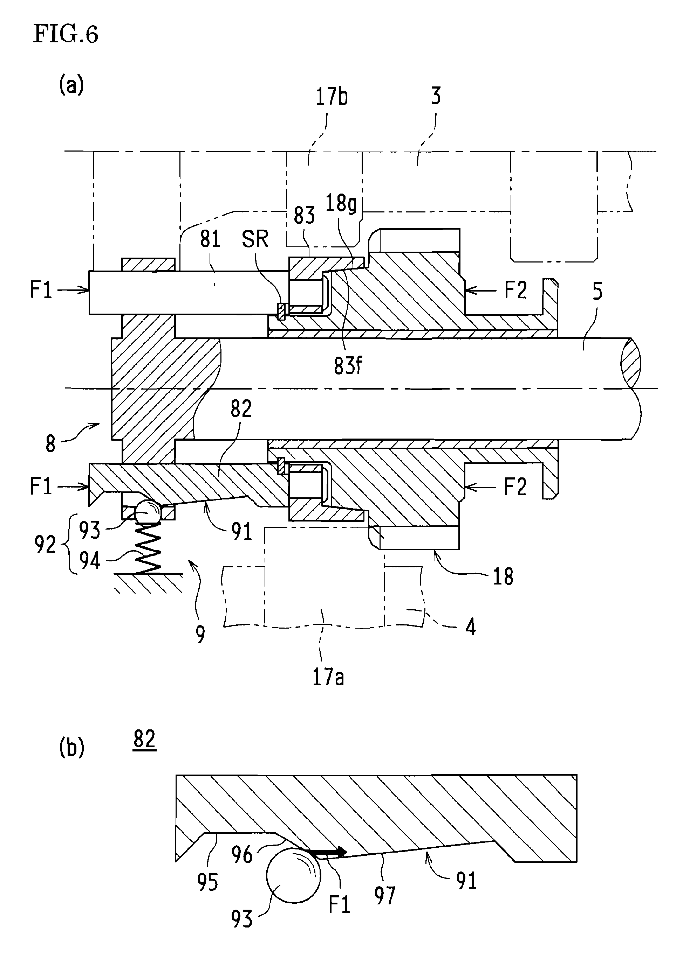

As the shift lever L is manipulated further toward the reverse-gear position REV for gear shifting, the reverse idler gear 18 starts to engage the reverse drive gear 17a and receive a rotational driving force from the reverse drive gear 17a, thereby starting to rotate, as illustrated in Figure 6. In this state, the reverse idler gear 18 is yet to engage the reverse driven gear 17b. Meanwhile, the lock ball 93 of the lock ball mechanism 92 has moved from the horizontal portion 95 to the synchronizing incline portion 96. The reverse idler gear 18 is about to slide, with the pressing force exerted by the lock ball 93 being applied to the synchronizing incline portion 96. A horizontal component of the pressing force exerted by the lock ball 93 on the synchronizing incline portion 96 (see arrow F1 in Figure 6(b)) acts on the guide shaft 82 so as to move the guide shaft 82 toward the gear retracted side. In other words, the component acts on the guide shaft 82 and the reverse gear synchro plate 83 as a pressing force toward the gear retracted side (reverse idler gear 18). Meanwhile, the manipulation force on the shift lever L is being exerted on the reverse idler gear 18 via the shift mechanism 7 as a pressing force toward the gear forward moving side (see arrow F2 in Figure 6(a)). Therefore, the reverse gear synchro plate 83 and the reverse idler gear 18 receive the pressing forces F1 and F2, respectively, which act in such directions as to bring the plate 83 and the gear 18 closer to each other. That brings the tapered cone surface 83f of the reverse gear synchro plate 83 and the tapered cone surface 18g of the reverse idler gear 18 into frictional contact. The frictional contact synchronizes the reverse idler gear 18 with the reverse idler shaft (fixed shaft member) 5 via the reverse gear synchro plate 83 and the guide shafts 81 and 82. The reverse idler gear thus stops rotating.

The shift lever L is further manipulated toward the reverse-gear position REV for gear shifting until the reverse idler gear 18 slides to a position where the reverse idler gear 18 starts to engage the reverse driven gear 17b, as illustrated in Figure 7. As this happens, the lock ball 93 of the lock ball mechanism 92 reaches the gear retracted side end of the synchronizing incline portion 96. As a result, the pressing force exerted by the lock ball 93 on the synchronizing incline portion 96 (pressing force F1 indicated by an arrow in Figure 6(b)) is relieved. Accordingly, the frictional contact force between the tapered cone surface 83f of the reverse gear synchro plate 83 and the tapered cone surface 18g of the reverse idler gear 18 decreases. From this time on, the point of application of the pressing force exerted by the lock ball 93 changes from the synchronizing incline portion 96 to the non-synchronizing incline portion 97.

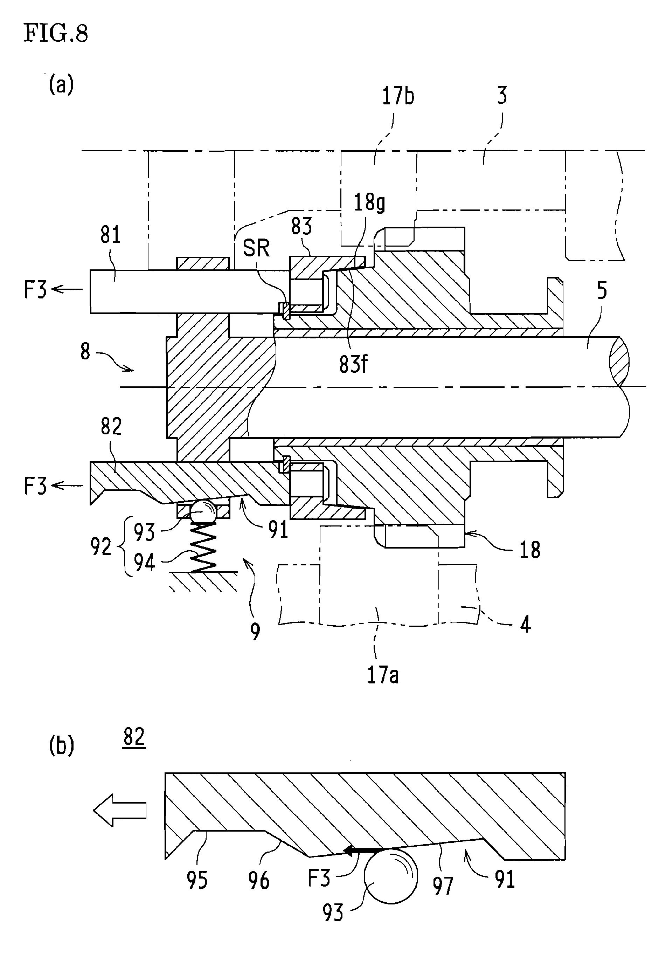

Thereafter, as illustrated in Figure 8, the reverse idler gear 18 starts to engage the reverse driven gear 17b. In this state, since the reverse idler gear 18 has already stopped rotating, the engaging operation on the non-rotating reverse driven gear 17b is performed smoothly, causing no reverse shift gear whining. Meanwhile, the lock ball 93 of the lock ball mechanism 92 has moved from the synchronizing incline portion 96 to the non-synchronizing incline portion 97. The reverse idler gear 18 is about to slide, with the pressing force exerted by the lock ball 93 being applied to the non-synchronizing incline portion 97. A horizontal component of the pressing force exerted by the lock ball 93 on the non-synchronizing incline portion 97 (see arrow F3 in Figures 8(a) and 8(b)) acts on the guide shaft 82 so as to move the guide shaft 82 toward the gear forward moving side. In other words, the component acts on the guide shaft 82 and the reverse gear synchro plate 83 as a pressing force toward the gear forward moving side (in a direction moving away from the reverse idler gear 18). Therefore, the tapered cone surface 83f of the reverse gear synchro plate 83 is moved away from the tapered cone surface 18g of the reverse idler gear 18 and hence out of frictional contact. This pull-in force continuously acts until the lock ball 93 of the lock ball mechanism 92 reaches the gear retracted side end of the non-synchronizing incline portion 97. Even if the driver of the vehicle suspends the gear shifting operation of the shift lever L in the state shown in Figure 8, the reverse idler gear 18 is automatically moved to the reverse gear establishing position.

The horizontal component, F3, of the pressing force exerted by the lock ball 93 also acts as a pressing force exerted by the reverse gear synchro plate 83 on the snap ring SR toward the gear forward moving side, that is, as a force which pulls the reverse idler gear 18 in toward the gear forward moving side. This reduces the manipulation force required for the manipulation of the shift lever L.

As illustrated in Figure 9, when the lock ball 93 of the lock ball mechanism 92 reaches the gear retracted side end of the non-synchronizing incline portion 97, the positions of the widthwise centers of the teeth of the reverse idler gear 18 match those of the reverse drive gear 17a and the reverse driven gear 17b, establishing reverse gear.

As described above, in the present embodiment, even if the driver suspends the gear shifting operation of the shift lever L while the reverse idler gear 18 is sliding (even if the driver lets go of the shift lever L), the reverse idler gear 18 is forcibly pulled in to the reverse gear establishing position by the horizontal component, F3, of the pressing force exerted by the lock ball 93 on the non-synchronizing incline portion 97. As a result, the reverse idler gear 18 properly engages the reverse drive gear 17a and the reverse driven gear 17b. The configuration permits no incomplete engagement of the reverse idler gear 18 with the reverse drive gear 17a and the reverse driven gear 17b. Consequently, the rotational driving force is transferred better, and the gears 17a, 17b, and 18 are more durable.

In addition, after the reverse idler gear 18 is synchronized with the reverse idler shaft 5, the force F3 separates the tapered cone surface 83f of the reverse gear synchro plate 83 from the tapered cone surface 18g of the reverse idler gear 18 (pulls the tapered cone surface 83f of the reverse gear synchro plate 83 away from the tapered cone surface 18g of the reverse idler gear 18). Therefore, the frictional contact between the tapered cone surfaces 83f and 18g is discontinued which would otherwise add to frictional wear. A high level of reliability is thus maintained for the synchronization operation of the reverse synchronizer 8 over an extended period of time.

In addition, the separation of the tapered cone surface 83f of the reverse gear synchro plate 83 from the tapered cone surface 18g of the reverse idler gear 18 allows for tapered cone surfaces 18g and 83f with small taper angles (cone angles) in order to create a large contact area between the tapered cone surfaces 18g and 83f for improved synchronization capability More specifically, conventional art needed large taper angles to reduce frictional wear of the tapered cone surfaces. It was therefore difficult to create a large contact area. That restricted improvement in synchronization capability. In contrast, in the present embodiment, since the tapered cone surfaces 18g and 83f are forcibly separated (disengaged) from each other, small taper angles are yet able to reduce frictional wear. The configuration allows for improved synchronization capability and synchronization operation reliability.

### Other Embodiments

The embodiment described so far is an application of the present invention to the manual transmission 1 with six forward gears which is mounted on an FR vehicle. The present invention is by no means limited to this example, and further applicable to a manual transmission which is mounted on an FF (front engine, front wheel drive) vehicle. In addition, The number of forward gears is not limited to six, and the present invention is applicable to 5-speed manual transmissions and those with any other number of forward gears. The present invention is also applicable to a transmission including an actuator which operates in conjunction with the gear shifting operation performed by the driver of the vehicle so that gears are shifted using the actuator ("AMT" or automatic manual transmission).

In the previous embodiment, the reverse synchronizer includes two upper and lower guide shafts 81 and 82, and the lower guide shaft 82 alone has a detent mechanism 9. The present invention is by no means limited to this example. Alternatively, each of the guide shafts 81 and 82 may have a detent mechanism. The number of guide shafts 81 and 82 is by no means limited to two. Three or more guide shafts may be provided. When that is the case, only one of the guide shafts may have a detent mechanism, or two or more of them may have a detent mechanism.

The inclination angles and extent of the synchronizing incline portion 96 and the non-synchronizing incline portion 97, as well as the inclination angles of the tapered cone surfaces 18g and 83f, are by no means limited to those described in the previous embodiment and may be specified as needed.

### Industrial Applicability

The present invention is applicable to a reverse synchronizer for a manual transmission mounted on an automobile.

### Reference Signs List

- 1: Manual Transmission
- 5: Reverse Idler Shaft
- 8: Reverse Synchronizer
- 17a: Reverse Drive Gear
- 17b: Reverse Driven Gear
- 18: Reverse Idler Gear
- 18g: Tapered Cone Surface (Gear-side Synchronization Section)
- 82: Guide Shaft (Synchronization Member)
- 83: Reverse Gear Synchro Plate (Synchronization Member)
- 83f: Tapered Cone Surface (Shaft-side Synchronization Section)
- 9: Detent Mechanism (Synchronization Section Separating Means)
- 91: Detent Groove
- 92: Lock Ball Mechanism (Press Mechanism)
- 96: Synchronizing Incline Portion
- 97: Non-synchronizing Incline Portion
- SR: Snap Ring

## Claims

1. A reverse synchronizer for a manual transmission, comprising:
a reverse idler gear capable of moving reciprocally between a reverse gear establishing position where rotational driving force can be transferred from a reverse drive gear to a reverse driven gear and vice versa and a non-reverse gear establishing position where no rotational driving force can be transferred from the reverse drive gear to the reverse driven gear and vice versa, wherein in moving the reverse idler gear toward the reverse gear establishing position, a shaft-side synchronization section provided on a reverse idler shaft side and a gear-side synchronization section provided on a reverse idler gear side are brought into contact with each other so that rotation of the reverse idler gear is synchronized with rotation of the reverse idler shaft; and
synchronization section separating means for applying, after synchronizing the reverse idler gear to the reverse idler shaft by the contact between the shaft-side synchronization section and the gear-side synchronization section in moving the reverse idler gear toward the reverse gear establishing position, a biasing force to the shaft-side synchronization section in such a direction as to move the shaft-side synchronization section away from the gear-side synchronization section.

2. The reverse synchronizer as set forth in claim 1,
wherein:
the shaft-side synchronization section is a tapered cone surface provided on a reverse idler gear side of a synchronization member supported so as to reciprocally move freely relative to the reverse idler shaft;
the gear-side synchronization section is a tapered cone surface formed on an outer circumferential surface of the reverse idler gear; and
the synchronization section separating means includes: a non-synchronizing incline portion formed on the synchronization member so as to incline outward when viewed in such a direction that the reverse idler gear moves toward the reverse gear establishing position; and a press mechanism for exerting a pressing force on the non-synchronizing incline portion in a direction which is orthogonal to the direction in which the reverse idler gear is moved.

3. The reverse synchronizer as set forth in claim 2, wherein the synchronization member is retained by a snap ring attached to an outer circumferential section of the reverse idler gear so as to move in conjunction with movement of the reverse idler gear.

4. The reverse synchronizer as set forth in claim 2 or 3, wherein:
in moving the reverse idler gear toward the reverse gear establishing position, the reverse idler gear starts to engage the reverse driven gear after having started to engage the reverse drive gear;
the synchronization member includes a synchronizing incline portion provided contiguously with an end, of the non-synchronizing incline portion, toward which the reverse idler gear moving toward the reverse gear establishing position moves;
the synchronizing incline portion inclines inward when viewed in such a direction that the reverse idler gear moves toward the reverse gear establishing position;
the synchronizing incline portion and the non-synchronizing incline portion have an interface at a place where in moving the reverse idler gear toward the reverse gear establishing position, a point of application of the pressing force exerted by the press mechanism advances from the synchronizing incline portion to the non-synchronizing incline portion at a time when the reverse idler gear starts to engage the reverse driven gear.
